(19) Europäisches Patentamt

European Patent Office

Office européen des brevets

(11) **EP 4 121 781 B1**

(12) **EUROPÄISCHE PATENTSCHRIFT**

(45) Veröffentlichungstag und Bekanntmachung des Hinweises auf die Patenterteilung:
**03.12.2025 Patentblatt 2025/49**

(21) Anmeldenummer: **21712099.7**

(22) Anmeldetag: **11.03.2021**

(51) Internationale Patentklassifikation (IPC):
***G01P 15/093*** (2006.01)

(52) Gemeinsame Patentklassifikation (CPC):
**G01P 15/093;** G01P 2015/0837; G01P 2015/0854;
G01P 2015/0857; Y02E 10/72

(86) Internationale Anmeldenummer:
**PCT/EP2021/056152**

(87) Internationale Veröffentlichungsnummer:
**WO 2021/185667 (23.09.2021 Gazette 2021/38)**

(54) **FASEROPTISCHER BESCHLEUNIGUNGSSENSOR**

FIBRE-OPTIC ACCELEROMETER

ACCÉLÉROMÈTRE À FIBRE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2020 DE 102020107180**

(43) Veröffentlichungstag der Anmeldung:
**25.01.2023 Patentblatt 2023/04**

(73) Patentinhaber: **VC VIII Polytech Holding ApS
6740 Bramming (DK)**

(72) Erfinder:
• **KIENITZ, Sascha
81547 München (DE)**
• **LOHR, Laura
80807 München (DE)**
• **SCHMID, Markus
80636 München (DE)**

(74) Vertreter: **Zacco Denmark A/S
Arne Jacobsens Allé 15
2300 Copenhagen S (DK)**

(56) Entgegenhaltungen:
EP-B1- 3 227 552     DE-B4- 112005 003 758
US-A1- 2019 360 323

**Beschreibung**

TECHNISCHES GEBIET

Ausführungsformen der vorliegenden Erfindung betreffen im Allgemeinen einen Faseroptischen Beschleunigungssensor, insbesondere zum Bestimmen einer Beschleunigung entlang einer Achse, und ferner ein Verfahren zum Herstellen eines faseroptischen Beschleunigungssensors. Insbesondere betreffen Ausführungsformen ein faseroptisches Beschleunigungssensorsystem sowie eine Windkraftanlage.

STAND DER TECHNIK

Das Messen, Überwachen oder Regeln der Beschleunigung von Messobjekten ist in vielen Bereichen der industriellen Anwendung von großer Bedeutung. Herkömmliche Beschleunigungsmesssysteme verwenden ein Feder-Masse-System zur Bestimmung einer Beschleunigung und basieren auf der Erfassung einer Auslenkung eines Messobjekts aus einer Ruheposition. Insbesondere kann in einem faseroptischen Messsystem die Erfassung der Auslenkung einer Membran anhand einer Änderung von Lichteigenschaften erfolgen. Um ein solches faseroptisches Messsystem empfindlicher zu gestalten, wird herkömmlicherweise die Federwirkung der Membran verändert oder die Membran wird mit einer zusätzlichen Masse beaufschlagt, was in vielen Fällen zu einem asymmetrischen Aufbau des Feder-Masse-Systems führt.

Allerdings weisen bisher bekannte Lösungen bei der Messung einer Beschleunigung verschiedene Nachteile auf. Insbesondere weisen herkömmliche faseroptische Messsysteme eine Querempfindlichkeit zu Rotationsbeschleunigungen oder eine geringe Stabilität oder eine geringe Sensitivität auf.

Das Dokument EP 3 227 552 B1 offenbart einen faseroptischen Beschleunigungssensor zum Bestimmen einer Beschleunigung entlang einer Achse, der eine optische Faser mit einer Faserendfläche sowie eine Schwingungsmembran mit einem Membranrahmen und einer Auslenkmasse umfasst. Die Schwingungsmembran ist eingerichtet, eine aus der Faserendfläche austretende Primärstrahlung zumindest teilweise zu reflektieren.

Das Dokument DE 11 2005 003758 B4 schlägt für einen ähnlichen Sensor eine Schwingungsmembran vor, die mit Verbindungsbrücken ausgestattet ist.

Das Dokument US 2019/360323 A1 offenbart einen Beschleunigungssensor nach dem Oberbegriff des Anspruchs 1.

ZUSAMMENFASSUNG DER ERFINDUNG

Die Erfindung ist definiert durch die unabhängigen Ansprüche. Bevorzugte Ausführungsformen finden sich in den abhängigen Ansprüchen. Ein Aspekt betrifft einen Faseroptischer Beschleunigungssensor zum Bestimmen einer Beschleunigung entlang einer Achse, umfassend eine optische Faser mit einer Faserendfläche, und eine Schwingungsmembran mit einem Membranrahmen, einer Auslenkmasse und Verbindungsbrücken, wobei die Schwingungsmembran eingerichtet ist, eine aus der Faserendfläche austretende Primärstrahlung zumindest teilweise zu reflektieren, und wobei die Verbindungsbrücken den Membranrahmen und die Auslenkmasse an mindestens zwei voneinander verschiedenen, axialen Positionen verbinden.

Ein weiterer Aspekt betrifft ein faseroptisches Beschleunigungssensorsystem mit mindestens zwei faseroptischen Beschleunigungssensoren nach hierin beschriebenen Ausführungsformen, wobei das faseroptische Beschleunigungssensorsystem eingerichtet ist zum Bestimmen von Beschleunigungen entlang von mindestens zwei Achsen.

Noch ein weiterer Aspekt betrifft eine Windkraftanlage mit mindestens einem faseroptischen Beschleunigungssensor nach hierin beschriebenen Ausführungsformen oder mindestens einem faseroptischen Beschleunigungssensorsystem nach hierin beschriebenen Ausführungsformen.

Ein weiterer Aspekt betrifft ein Verfahren zum Herstellen eines faseroptischen Beschleunigungssensors zum Bestimmen einer Beschleunigung entlang einer Achse, insbesondere eines faseroptischen Beschleunigungssensors nach hierin beschriebenen Ausführungsformen, umfassend Bereitstellen eines transparenten Substrats, und selektives Laserätzen einer Schwingungsmembran aus dem transparenten Substrat, wobei die Schwingungsmembran einen Membranrahmen, eine Auslenkmasse und Verbindungsbrücken umfasst, und wobei die Verbindungsbrücken den Membranrahmen und die Auslenkmasse an mindestens zwei voneinander verschiedenen, axialen Positionen verbinden.

KURZE BESCHREIBUNG DER ZEICHNUNGEN

Ausführungsbeispiele sind in den Zeichnungen dargestellt und in der nachfolgenden Beschreibung näher erläutert:

Figur 1 zeigt schematisch einen faseroptischen Beschleunigungssensor mit zugehörigem Strahlverlauf, gemäß einer Ausführungsform;

Figur 2 zeigt schematisch eine Schwingungsmembran eines faseroptischen Beschleunigungssensors gemäß einer Ausführungsform;

Figur 3 zeigt schematisch einen Teil einer Windkraftanlage mit Rotorblättern und daran angebrachten faseroptischen Beschleunigungssensoren;

Figur 4 zeigt schematisch einen Rotor einer Windkraftanlage mit Rotorblättern und faseroptischen Beschleunigungssensoren gemäß hierin beschriebenen Ausführungsformen;

Figur 5 zeigt schematisch ein Messsystem für ein faseroptisches Messsystem gemäß hierin beschriebenen Ausführungsformen;

Figur 6 zeigt schematisch ein weiteres Messsystem gemäß hierin beschriebenen Ausführungsformen; und

Figur 7 zeigt ein Ablaufdiagramm zur Veranschaulichung eines Verfahrens zum Herstellen eines faseroptischen Beschleunigungssensors gemäß hierin beschriebenen Ausführungsformen.

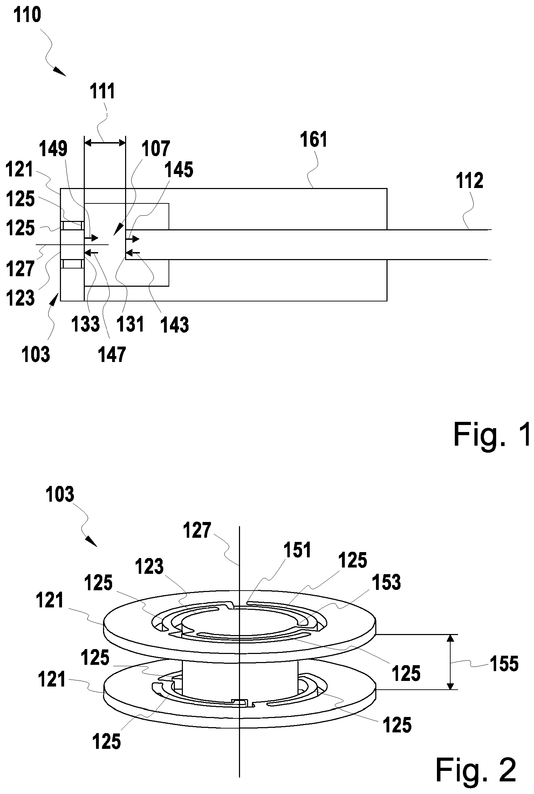

In den Zeichnungen bezeichnen gleiche Bezugszeichen gleiche oder funktionsgleiche Komponenten oder Schritte. Der Übersichtlichkeit halber sind nicht alle Merkmale eines Typs mit einem Bezugszeichen versehen, beispielsweise die Verbindungsbrücken (Bezugszeichen: 125) in Figur 1.

WEGE ZUR AUSFÜHRUNG DER ERFINDUNG

Im Folgenden wird detailliert Bezug genommen auf verschiedene Ausführungsformen der Erfindung, wobei ein oder mehrere Beispiele in den Zeichnungen veranschaulicht sind. Der Ausdruck "oder" ist hierin insbesondere als "und/oder" zu verstehen.

Faseroptische Sensoren, die auf einer beschleunigungsabhängigen Veränderung von beispielsweise der Lichtintensität oder der Lichtphase des sich durch die optische Faser ausbreitenden Lichts beruhen, weisen ein großes Anwendungspotenzial auf. So ist die faseroptische Beschleunigungsmessung in Bereichen von Messobjekten vorteilhaft, die Blitzeinschlag ausgesetzt sind und daher einer elektrischen Messung nicht zugänglich sind. In zweckmäßiger Weise werden hier jegliche elektrische Leitungen entlang des Messobjekts vermieden, so dass eine Datenerfassung rein optisch erfolgen kann.

Zur Messung von Beschleunigungen mit hoher Auflösung werden gemäß hierin beschriebenen Ausführungsformen faseroptische Beschleunigungssensoren herangezogen, welche eine optische Faser und eine Schwingungsmembran aufweisen. Die Schwingungsmembran, beispielsweise eine Auslenkmasse der Schwingungsmembran, und eine Faserendfläche der optischen Faser können reflektierend ausgeführt sein. So kann beispielsweise aus der optischen Faser und der Schwingungsmembran ein optischer Resonator eines Fabry-Perot-Interferometers aufgebaut werden. Die Auslenkmasse der Schwingungsmembran kann bei einer Beschleunigung des faseroptischen Beschleunigungssensors relativ zu dem Membranrahmen ausgelenkt werden, wobei insbesondere eine Interferenzwellenlänge des optischen Resonators verändert werden kann. Über die Änderung der Interferenzwellenlänge kann die Beschleunigung erfasst werden.

Beispiele für Messobjekte, bei welchen eine Beschleunigungsmessung ohne elektrische Leitungen erfolgen sollte, sind Rotorblätter von Windkraftanlagen oder Tragflächen von Flugzeugen. Durch geeignete Anbringungstechniken lassen sich verteilte faseroptische Beschleunigungssensoren zur Erfassung von Beschleunigungen, beispielsweise von Vibrationen, an derartigen Messobjekten einsetzen. So unterliegen z.B. Windkraftanlagen einer komplexen Steuerung, die auf Sensordaten aus der Windkraftanlage selbst beruht, beispielsweise auf zuverlässigen Beschleunigungsdaten. Eine Übertragung optischer Signale mittels einer optischen Faser bringt ein reduziertes Risiko eines Blitzschadens mit sich. Daher können faseroptische Beschleunigungssensoren derart zur Verfügung gestellt werden, dass sie eine Montage in einem radial äußeren Bereich eines Rotorblatts erlauben, ohne das Risiko eines Blitzschadens zu erhöhen.

Figur 1 zeigt schematisch einen faseroptischen Beschleunigungssensor 110, der als ein Fabry-Perot-Interferometer ausgebildet sein kann. Insbesondere ist der faseroptische Beschleunigungssensor 110 in einem Längsschnitt entlang einer Achse 127, entlang welcher der faseroptische Beschleunigungssensor 110 eine Beschleunigung messen kann, dargestellt. Ferner ist ein Strahlverlauf zur Veranschaulichung der Prinzipien der Erfindung dargestellt. Der faseroptische Beschleunigungssensor 110 umfasst eine optische Faser 112 mit einer Faserendfläche 131 und eine Schwingungsmembran 103. Zur Vereinfachung der Erläuterung ist in Figur 1 nur ein Teil der optischen Faser 112 gezeigt, während ein Fasermantel und eine Faserschutzhülle der Übersichtlichkeit halber nicht dargestellt sind.

Zwischen der Faserendfläche 131 und der Schwingungsmembran 103, insbesondere zwischen der Faserendfläche 131 und der Auslenkmasse 123, ist eine Kavität 107 ausgebildet. Die Schwingungsmembran 103 umfasst einen Membranrahmen 121, Verbindungsbrücken 125 und eine Auslenkmasse 123. Der Membranrahmen 121 ist insbesondere relativ zu der Faserendfläche 131 zumindest im Wesentlichen ortsfest angeordnet. Beispielsweise ist der Membranrahmen 121 starr mit der optischen Faser 112 verbunden. Die Auslenkmasse 123 ist über die Verbindungsbrücken 125 mit dem Membranrahmen 121 verbunden. Die Verbindungsbrücken können als federnde Elemente zwischen dem Membranrahmen 121 und der Auslenkmasse 123 ausgebildet sein. Bei einer Beschleunigung des faseroptischen Beschleunigungssensors 110 kann die Auslenkmasse 123 relativ zu dem Membranrahmen 121 ausgelenkt werden. Insbesondere kann die Auslenkmasse 123 entlang der Achse 127 ausgelenkt werden. Gemäß Ausführungsformen kann die Auslenkmasse 123 zumindest im Wesentlichen zylinderförmig ausgeführt sein, wobei beispielsweise die Zylinderachse der zylinderförmigen Auslenkmasse 123 entlang der Achse 127 verläuft.

Gemäß Ausführungsformen weist die Schwingungsmembran 103 eine reflektierende Membranfläche auf. Insbesondere ist die reflektierende Membranfläche senkrecht zu der Achse 127 ausgerichtet. In der Fig. 1 ist beispielsweise eine axiale Membranfläche 133 an einer der Kavität 107 zugewandten Seite der Schwingungsmembran 103 als reflektierende Membranfläche ausgeführt. Insbesondere sind die reflektierende Membranfläche und die Faserendfläche 131 zumindest im Wesentlichen parallel zueinander ausgerichtet. Die Faserendfläche 131 kann reflektierend ausgeführt sein. In weiteren Ausführungsformen ist eine weitere reflektierende Fläche im Strahlgang zwischen der Faserendfläche 131 und der Schwingungsmembran 103 angeordnet.

Unter "reflektierend" oder einem "Spiegel" ist hierin insbesondere zu verstehen, dass zumindest ein Anteil der Intensität eines eingestrahlten Lichtstrahls reflektiert wird, beispielsweise ein Anteil von mindestens 0,5% des eingestrahlten Lichtstrahls, insbesondere ein Anteil von mindestens 1 % oder mindestens 2%.

In der Figur 1 wird Licht über die optische Faser 112 in den faseroptischen Beschleunigungssensor 110 eingestrahlt. Beispielsweise trifft ein erster einfallender Strahl 143 aus der optischen Faser 112 auf die Faserendfläche 131. Ein erster Teil des ersten einfallenden Strahls 143 wird an der Faserendfläche 131 als erster reflektierter Strahl 145 zurück in die optische Faser 112 reflektiert. Ein zweiter Teil des ersten einfallenden Strahls 143 wird an der Faserendfläche 131 als zweiter einfallender Strahl 147, insbesondere als Primärstrahlung aus der optischen Faser 112, in die Kavität 107 zwischen der Faserendfläche 131 und der Schwingungsmembran 103 transmittiert. Der zweite einfallende Strahl 147 trifft auf die Schwingungsmembran 103, insbesondere auf die Auslenkmasse 123 der Schwingungsmembran 103. Der zweite einfallende Strahl 147 wird zumindest teilweise an einer reflektierenden Membranfläche reflektiert, in der Fig. 1 beispielsweise an der der Kavität 107 zugewandten axialen Membranfläche 133 der Auslenkmasse 123. Insbesondere wird zumindest ein Teil des zweiten einfallenden Strahls 147, beispielsweise als zweiter reflektierter Strahl 149, zurück in die Kavität 107 und in Richtung der optischen Faser 112 reflektiert. Ein durch die Faserendfläche 131 transmittierter Anteil des zweiten reflektierten Strahls 149 kann in der optischen Faser 112 beispielsweise mit dem ersten reflektierten Strahl 143 interferieren. Weiterhin kann das Licht zwischen der Faserendfläche 131 und der Auslenkmasse 123 mehrfach reflektiert werden. Die Faserendfläche 131 der optischen Faser 112 dient insbesondere als Reflexionsfläche für Licht aus der optischen Faser 112, als Lichtaustrittsfläche zum Emittieren von Licht aus der optischen Faser in Richtung hin zu der Schwingungsmembran 103, und als Lichteintrittsfläche zum Aufnehmen von Licht, welches aus der Kavität 107 zurück in die optische Faser 112 reflektiert wird.

Durch die Interferenz reflektierter Strahlen, insbesondere des ersten reflektierten Strahls 145, des zweiten reflektierten Strahls 149 oder mehrfach reflektierter Strahlen, kann sich ein Interferenzmuster nach Maßgabe des Fabry-Perot-Effekts bilden. Das Interferenzmuster kann herangezogen werden, um eine auf den faseroptischen Beschleunigungssensor 110 wirkende Beschleunigung zu bestimmen. Beispielsweise kann eine Kavitätslänge 111 der Kavität 107 oder eine Auslenkung der Auslenkmasse 123 bestimmt werden und daraus eine Beschleunigung des faseroptischen Beschleunigungssensors 110. In weiteren Ausführungsformen kann die Beschleunigung über eine mathematische Funktion oder eine Lookup-Tabelle aus dem Interferenzmuster bestimmt werden.

In einem Fabry-Perot-Interferometer, wie es auch in Figur 1 veranschaulicht ist, wird ein freier Spektralbereich, FSR, bereitgestellt, in welchem ein Wellenlängenabstand eindeutig bestimmt werden kann. Dies bedeutet, dass bei einer Messung innerhalb des freien Spektralbereichs keine Mehrdeutigkeiten im Messsignal auftreten. Die in Figur 1 dargestellte Kavitätslänge 111, d, wird durch die folgende Gleichung bestimmt:

$$d = \frac{\lambda_1 \lambda_2}{2\,n\,\Delta\lambda\,\cos(\theta)}$$

wobei $\Delta\lambda = \lambda_2, -\lambda_1$
wobei $\Delta\lambda$ die Wellenlängendifferenz zwischen zwei Interferenzminima bei $\lambda_1$ und $\lambda_2$ bezeichnet, n den Brechungsindex des in der Kavität eingeschlossenen Mediums, beispielsweise Luft, bezeichnet, und $\theta$ den Winkel zwischen der Oberflächennormalen der Reflexionsflächen und der Lichtausbreitungsrichtung in dem optischen Resonator bezeichnet.

Eine Phasendifferenz zwischen den reflektierten Strahlen, beispielsweise zwischen dem ersten reflektierten Strahl 145, dem zweiten reflektierten Strahl 149 oder mehrfach reflektierten Strahlen, ist durch die Kavitätslänge 111 bestimmt. Insbesondere ist die Phasendifferenz durch den Abstand d zwischen der Faserendfläche 131 und der reflektierenden Membranfläche, beispielsweise der axialen Membranfläche 133, bestimmt. Mit anderen Worten ist der Interferometer-Aufbau derart, dass Licht in die Kavität 107 eintreten und an der Schwingungsmembran 103 reflektiert werden kann. Die reflektierende Membranfläche, die Faserendfläche 131 und die Kavität 107 bilden somit den optischen Resonator, wie beispielsweise einen optischen Resonator eines Fabry-Perot-Interferometers. Das in die optische Faser 112 zurückgeworfene Licht zeigt ein Interferenzspektrum, insbesondere Interferenzmaxima oder Interferenzminima, deren Anzahl oder Lage von der Kavitätslänge 111, insbesondere dem Abstand d zwischen der Faserendfläche 131 und der reflektierenden Membranfläche, abhängt. Durch eine Analyse der Lage der Interferenzmaxima oder der Interferenzminima im reflektierten Spektrum können eine Veränderung der Kavitätslänge 111 oder insbesondere eine beschleunigungsabhängige Auslenkung der Auslenkmasse 123 bestimmt werden.

Gemäß Ausführungsformen ist die reflektierende Membranfläche an der Auslenkmasse vorgesehen. Insbesondere ist die reflektierende Membranfläche, beispielsweise die axiale Membranfläche 133, senkrecht zu der Achse 127 ausgerichtet. Insbesondere sind die reflektierende Membranfläche und die Faserendfläche 131 zumindest im Wesentlichen parallel zueinander ausgerichtet.

Gemäß Ausführungformen verbinden die Verbindungsbrücken 125 den Membranrahmen 121 und die Auslenkmasse 123 an mindestens zwei voneinander verschiedenen, axialen Positionen, wie beispielsweise in den Figuren 1 und 2 dargestellt. Der Ausdruck "axial" ist hierin insbesondere in Bezug auf die Achse 127 zu verstehen. Die Verbindungsbrücken 125 können als federnde Elemente zwischen dem Membranrahmen 121 und der Auslenkmasse 123 eingerichtet sein. Die Schwingungsmembran 103 ist insbesondere eingerichtet, dass die Auslenkmasse 123 bei einer auf den faseroptischen Beschleunigungssensor 110 wirkenden Beschleunigung ausgelenkt wird, beispielsweise relativ zu einer Ruhelage der Auslenkmasse 123. Insbesondere wird die Auslenkmasse 123 ausgelenkt bei einer Beschleunigung, die entlang der Achse 127 gerichtet ist, oder bei einer Beschleunigung, die eine Komponente umfasst, welche entlang der Achse 127 gerichtet ist.

Durch eine Verbindung der Auslenkmasse 123 mit dem Membranrahmen 121 kann beispielsweise eine Auslenkung der Auslenkmasse 123 zumindest im Wesentlichen auf eine Bewegung der Auslenkmasse 123 entlang der Achse 127 reduziert sein. Insbesondere können Verkippungen der Auslenkmasse 123 reduziert sein. Unter anderem kann eine Querempfindlichkeit des faseroptischen Beschleunigungssensors 110, beispielsweise bei Rotationsbeschleunigungen, gegenüber bekannten Beschleunigungssensoren reduziert sein. Ein weiterer Vorteil kann sein, dass sich eine Masse der Auslenkmasse 123 entlang der Achse 127 erstreckt und eine größere Masse aufweisen kann, insbesondere ohne eine asymmetrische Verteilung der Masse bezüglich der Achse 127. Beispielsweise kann der faseroptische Beschleunigungssensor 110 eine höhere Sensitivität aufweisen, insbesondere aufgrund der größeren Masse. Weiterhin kann beispielsweise durch eine Verbindung der Auslenkmasse 123 mit dem Membranrahmen 121 an mindestens zwei axialen Positionen die Stabilität der Schwingungsmembran 103 erhöht sein.

Gemäß einigen Ausführungsformen sind die Verbindungsbrücken 125 zwischen dem Membranrahmen 121 und der Auslenkmasse 123 als Mäanderarme ausgeführt. Insbesondere weisen die Verbindungsbrücken 125 jeweils eine erste Verbindungsstelle 151 zu dem Membranrahmen 121 und eine zweite Verbindungsstelle 153 zu der Auslenkmasse 123 auf, wobei die erste Verbindungsstelle 151 in Umfangsrichtung um die Achse 127 versetzt zu der zweiten Verbindungsstelle 153 ist. In Ausführungsformen umfasst ein Mäanderarm insbesondere mindestens drei Armabschnitte, wobei mindestens zwei der Armabschnitte zumindest im Wesentlichen radial ausgerichtet sind und mindestens ein Armabschnitt zumindest im Wesentlichen in Umfangsrichtung um die Achse 127 ausgerichtet ist. Unter "zumindest im Wesentlichen radial" ist beispielsweise eine Abweichung von maximal 30°, insbesondere maximal 20° oder maximal 10°, im Vergleich zu einer radialen Richtung zu verstehen. Unter "zumindest im Wesentlichen in Umfangsrichtung" ist beispielsweise eine Abweichung von maximal 30°, insbesondere maximal 20° oder maximal 10° im Vergleich zu einer Umfangsrichtung zu verstehen. Beispielsweise sind die Verbindungsbrücken 125 der in Figur 2 dargestellten Schwingungsmembran 103 als Mäanderarme ausgeführt.

Gemäß Ausführungsformen umfasst die Schwingungsmembran 103 an den mindestens zwei axialen Positionen jeweils mindestens zwei, insbesondere mindestens drei, Verbindungsbrücken 125. Beispielsweise umfasst die Schwingungsmembran 103 an den mindestens zwei axialen Positionen jeweils genau drei oder genau vier Verbindungsbrücken 125. In der beispielhaften Ausführungsform der Figur 2 umfasst die Schwingungsmembran 103 an den zwei axialen Positionen jeweils drei Verbindungsbrücken 125.

Gemäß einigen Ausführungsformen umfassen die Verbindungsbrücken 125 erste Verbindungsbrücken an einer ersten axialen Position der mindestens zwei axialen Positionen und zweite Verbindungsbrücken an einer zweiten axialen Position der mindestens zwei axialen Positionen, wobei die ersten Verbindungsbrücken in Umfangsrichtung um die Achse 127 versetzt zu den zweiten Verbindungsbrücken angeordnet sind. Beispielsweise können jeweilige erste Verbindungsstellen 151 der ersten Verbindungsbrücken und der zweiten Verbindungsbrücken in Umfangsrichtung versetzt zueinander angeordnet sein, oder es können jeweilige zweite Verbindungsstellen 153 der ersten Verbindungsbrücken und der zweiten Verbindungsbrücken in Umfangsrichtung zueinander versetzt angeordnet sein. In der Figur 2 sind die Verbindungsbrücken 125 in Umfangsrichtung um die Achse 127 versetzt angeordnet. Beispielsweise sind an den zwei axialen Positionen die jeweiligen Verbindungsbrücken 125, beispielsweise die jeweiligen ersten Verbindungsstellen 151 zwischen den Verbindungsbrücken 125 und dem Membranrahmen 121 oder die jeweiligen zweiten Verbindungsstellen 153 zwischen den Verbindungsbrücken 125 und der Auslenkmasse 123, in Umfangsrichtung um 60° versetzt zueinander angeordnet. Durch eine in Umfangsrichtung versetzte Anordnung der Verbindungsbrücken 125 kann beispielsweise eine Querempfindlichkeit der Auslenkung der Auslenkmasse 123 reduziert sein.

Bei Ausführungsformen beträgt eine axiale Länge der Auslenkmasse 123 oder ein axialer Abstand 155 zwischen den mindestens zwei axialen Positionen mindestens 0,1 mm, insbesondere mindestens 0,2 mm oder mindestens 0,5 mm, oder maximal 5 mm, insbesondere maximal 3 mm oder maximal 1,5 mm. Gemäß Ausführungsformen weist die Schwingungsmembran 103 einen Durchmesser quer zu der Achse 127 von mindestens 1 mm, insbesondere von mindestens 2 mm, oder von maximal 10 mm, insbesondere von maximal 7 mm oder maximal 5 mm, auf. Bei Ausführungsformen weist die Schwingungsmembran 103 eine Eigenfrequenz von mindestens 5 kHz, insbesondere von mindestens 10 kHz, oder von maximal 500 kHz, , insbesondere von maximal 200 kHz oder maximal 100 kHz, auf.

Gemäß Ausführungsformen ist die Schwingungsmembran eingerichtet für eine mechanische Auslenkung der Auslenkungsmasse von mindestens 0,25 nm/G, insbesondere von mindestens 0,5 nm/G oder von mindestens 1 nm/G, oder von maximal 40 nm/G, insbesondere von maximal 30 nm/G, von maximal 25 nm/G oder beispielsweise von maximal 20 nm/G. "G" steht hierin für die Erdbeschleunigung, beispielsweise gerundet 9,81 m/s$^2$.

Bei einigen Ausführungsformen ist die Schwingungsmembran 103 einstückig hergestellt. Insbesondere ist die Schwingungsmembran 103 aus einem einzigen Material hergestellt, beispielsweise aus einem einzigen, transparenten Material. Durch eine Herstellung aus einem einzigen Material können beispielsweise Spannungen in der Schwingungsmembran 103 vermieden werden. Gemäß Ausführungsformen ist die Schwingungsmembran 103 aus Glas, insbesondere aus Quarzglas oder Borosilikatglas, hergestellt.

Bei Ausführungsformen ist die Schwingungsmembran 103 durch selektives Laserätzen ("selective laser etching", SLE) hergestellt. Bei selektivem Laserätzen wird beispielsweise ein Substrat, insbesondere ein Glassubstrat aus Quarzglas oder Borosilikatglas, bereitgestellt. Die Form der Schwingungsmembran 103 wird zunächst durch Laser in das Substrat eingeprägt, wobei insbesondere die Bereiche des Substrats um die Schwingungsmembran 103 gezielt durch Laserstrahlung modifiziert werden, beispielsweise chemisch modifiziert werden. Die modifizierten Bereiche des Substrats können anschließend selektiv geätzt werden. Insbesondere können die modifizierten Bereiche des Substrats mit einer höheren Ätzrate entfernt werden als die in das Substrat eingeprägte, nicht modifizierte Struktur der Schwingungsmembran 103.

Gemäß einigen Ausführungsformen weist die Schwingungsmembran 103, insbesondere die Auslenkmasse 123, eine hochreflektierende Beschichtung auf. Unter "hochreflektierend" ist hierin insbesondere zu verstehen, dass mindestens 50% eines eingestrahlten Lichts, beispielsweise mindestens 70% oder mindestens 90%, reflektiert werden. Beispielsweise kann die der Kavität 107 zugewandte axiale Membranfläche 133 der Auslenkmasse 123 mit einer hochreflektierenden Beschichtung beschichtet sein, wie beispielsweise in Figur 1 dargestellt. In weiteren Ausführungsformen kann eine von der Kavität 107 abgewandte, hintere Membranfläche mit einer hochreflektierenden Beschichtung beschichtet sein. Durch das Bereitstellen einer hochreflektierenden Beschichtung kann beispielsweise eine höhere Intensität des reflektierten Lichts bereitgestellt werden.

Gemäß Ausführungsformen kann die hochreflektierende Beschichtung beispielsweise durch Aufdampfen einer Schicht Metall oder einer Metalllegierung auf der Schwingungsmembran 103, insbesondere auf der Auslenkmasse 123, hergestellt werden. Bei weiteren Ausführungsformen weist die Schwingungsmembran 103 keine hochreflektierende Beschichtung auf. Beispielsweise kann auf die Schwingungsmembran 103 einfallendes Licht an einer Oberfläche der Schwingungsmembran 103, beispielsweise an einem Übergang zwischen Glas und Luft, zumindest teilweise reflektiert werden.

Bei Ausführungsformen umfasst die Auslenkmasse 123 eine der Kavität 107 zugewandte, axiale Membranfläche 133 und hinter der axialen Membranfläche 133 einen Störstellenbereich zur diffusen Zerstreuung von Licht. Die axiale Membranfläche 133 ist als reflektierende Membranfläche ausgebildet. In dem Störstellenbereich kann durch die axiale Membranfläche 133 transmittiertes Licht diffus zerstreut werden. Störstellen des Störstellenbereichs können beispielsweise mit einem Laser in die Auslenkmasse 123 eingeschrieben werden.

Gemäß einigen Ausführungsformen ist der faseroptische Beschleunigungssensor 110 als ein Fabry-Perot-Interferometer eingerichtet. Die Faserendfläche 131 der optischen Faser 112 bildet einen ersten Spiegel des Fabry-Perot-Interferometers und die Schwingungsmembran 103, insbesondere die Auslenkmasse 123, bildet einen zweiten Spiegel des Fabry-Perot-Interferometers.

Bei Ausführungsformen ist die optische Faser 112 als eine Glasfaser oder ein Polymerleiter ausgebildet, wobei Materialien wie optische Polymere, Polymethylmethacrylat, Polycarbonat, Quarzglas, Ethylen-Tetrafluorethylen verwendet werden können, die gegebenenfalls dotiert sind. Insbesondere kann die optische Faser 112 als eine SMF-28 Faser ausgebildet sein.

Die optische Faser 112 wird von einem Faserhalter 161 des faseroptischen Beschleunigungssensors 110 gehalten. Der Faserhalter 161 kann in einem Sensorgehäuse (nicht dargestellt) des faseroptischen Beschleunigungssensors 110 angeordnet sein. Das Sensorgehäuse kann insbesondere ein Volumen um die Schwingungsmembran 103 umschließen. Gemäß einer Ausführungsform sind der Faserhalter 161 mit der optischen Faser 112, insbesondere mit einem Endstück der optischen Faser 112 mit der Faserendfläche 131, in einer Messposition relativ zu der Schwingungsmembran 103 angeordnet. Insbesondere ist die optische Faser 112 durch Kleben oder Löten an dem Faserhalter 161 befestigt.

Gemäß einigen Ausführungsformen weisen der faseroptische Beschleunigungssensor 110 oder ein Endstück der optischen Faser 112 mindestens eine optische Strahlformungskomponente auf, beispielsweise an der Faserendfläche 131, um einen aus der optischen Faser 112 austretenden Lichtstrahl zu formen. Beispielsweise weist die optische Strahlformungskomponente mindestens eines der folgenden auf: eine Gradientenindex-Linse (GRIN-Linse), ein Prisma, eine Kugellinse, eine Zylinderlinse, und jedwede Kombination davon. Gemäß einer weiteren Ausführungsform kann die optische Faser 112 als eine Monomodefaser ausgebildet sein.

Gemäß Ausführungsformen wird ein faseroptisches Beschleunigungssensorsystem bereitgestellt, mit mindestens zwei faseroptischen Beschleunigungssensoren nach hierin beschriebenen Ausführungsformen, wobei das faseroptische Beschleunigungssensorsystem eingerichtet ist zum Bestimmen von Beschleunigungen entlang von mindestens zwei Achsen. Das Beschleunigungssensorsystem kann insbesondere zwei oder drei faseroptische Beschleunigungssensoren umfassen. Bei Ausführungsformen sind mindestens zwei der Achsen der mindestens zwei faseroptischen Beschleunigungssensoren nicht parallel ausgerichtet, insbesondere zumindest im Wesentlichen orthogonal zueinander ausgerichtet. Das faseroptische Beschleunigungssensorsystem kann beispielsweise in oder an einem Rotorblatt angeordnet sein.

Gemäß Ausführungsformen wird eine Windkraftanlage angegeben, mit mindestens einem faseroptischen Beschleunigungssensor nach hierin beschriebenen Ausführungsformen oder mindestens einem faseroptischen Beschleunigungssensorsystem nach hierin beschriebenen Ausführungsformen. Insbesondere umfasst eine Windkraftanlage ein Rotorblatt, wobei der mindestens eine faseroptische Beschleunigungssensor oder das mindestens eine faseroptische Beschleunigungssensorsystem in oder an dem Rotorblatt angeordnet ist. Gemäß Ausführungsformen umfasst die Windkraftanlage zwei oder drei Rotorblätter, wobei an jedem der Rotorblätter mindestens ein faseroptischer Beschleunigungssensor oder mindestens ein faseroptisches Beschleunigungssensorsystem angeordnet ist. Ein Vorteil kann sein, dass ein faseroptischer Beschleunigungssensor gemäß hierin beschriebenen Ausführungsformen eine geringere Querempfindlichkeit gegenüber Rotationsbeschleunigungen aufweist, welche insbesondere bei Betrieb einer Windkraftanlage in Rotorblättern auftreten.

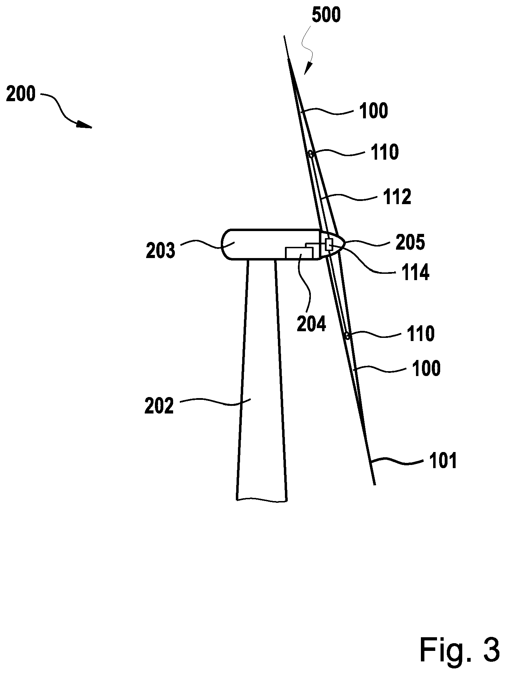

Figur 3 zeigt eine Windkraftanlage 200 als ein Anwendungsbeispiel für einen faseroptischen Beschleunigungssensor 110 nach hierin beschrieben, beispielsweise unter Bezugnahme auf die Figuren 1 und 2. Die Windkraftanlage 200 umfasst einen Turm 202 und eine Gondel 203. An der Gondel 203 ist ein Rotor 500 befestigt. Der Rotor 500 umfasst eine Nabe 205, an der Rotorblätter 100 befestigt sind. Wie in Figur 3 dargestellt, ist zumindest eine Sensoreinheit 110 zur faseroptischen Beschleunigungsmessung an einem Rotorblatt 100 bereitgestellt. Die Sensoreinheit 110 ist über eine optische Faser 112 mit einer Auswerteeinheit 114 verbunden. Die Auswerteeinheit 114 liefert z.B. ein Signal an eine Steuerungseinheit 204 der Windkraftanlage 200 zur Steuerung oder Regelung der Windkraftanlage 200. Das Rotorblatt 100 weist eine Blattachse 101 entlang seiner Längserstreckung auf. Die Länge des Rotorblatts 100 reicht von einem Blattflansch zu einer Blattspitze, wobei in diesem Bereich in zweckmäßiger Weise keine elektrischen Leitungen vorhanden sind. Faseroptische Beschleunigungssensoren hingegen können entlang der Längserstreckung des Rotorblatts beliebig angebracht werden. Beispielsweise kann der faseroptische Beschleunigungssensor 110 an einer radialen Position in einem äußeren Bereich des Rotorblatts 100 angeordnet sein.

Gemäß einigen Ausführungsformen wird ein optisches Signal wie zum Beispiel ein Interferenzspektrum mittels der optischen Faser 112 an die Auswerteeinheit 114 übertragen. Jedes Rotorblatt 100 kann individuelle Beschleunigungen, insbesondere Vibrationen oder Schwingungen, aufweisen. Daher wird gemäß manchen Ausführungsformen mindestens ein faseroptischer Beschleunigungssensor 110 in jedem Rotorblatt 100 bereitgestellt.

Um einen faseroptischen Beschleunigungssensor 110, wie er zum Beispiel in Figur 1 dargestellt ist, besonders einfach an einem Rotorblatt, insbesondere in einem äußeren radialen Bereich des Rotorblatts, bereitzustellen, ist es von Vorteil, wenn der faseroptische Beschleunigungssensor 110 in einem Querschnitt senkrecht zur Achse 127 eine geringe Abmessung aufweist. Eine maximale Abmessung in einem Querschnitt senkrecht zur Achse 127 kann zum Beispiel 10 mm oder weniger betragen.

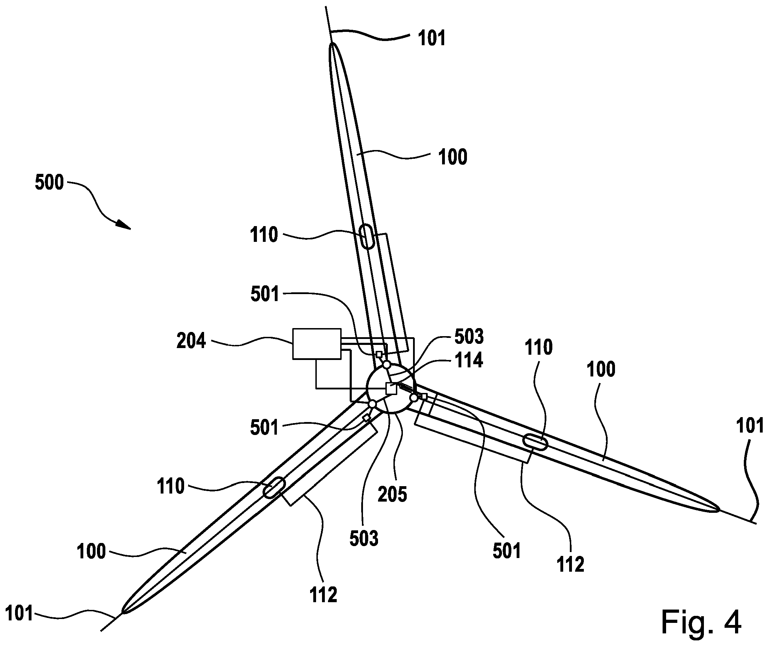

Figur 4 zeigt als ein Anwendungsbeispiel für den faseroptischen Beschleunigungssensor 110 den Rotor 500 einer Windkraftanlage, an welchem Beschleunigungsmessungen durchzuführen sind. Der Rotor 500 weist eine Nabe 205 und daran angebrachte Rotorblätter 100 auf. In zumindest einem der Rotorblätter 100 ist ein Beschleunigungssensor 110 bereitgestellt. Das Signal des faseroptischen Beschleunigungssensors 110 wird über die optische Faser 112 an einen Verteiler 501 geleitet. Der Verteiler 501 kann zum Beispiel ein Feldverteiler sein, an dem mehrere Signale von unterschiedlichen Sensoren bereitgestellt werden. Der Verteiler 501 kann am Blattschott des Rotorblatts 100 angebracht sein und kann zum An- und Abstecken eines Signalkabels eines Sensors, beispielsweise einer optischen Faser 112 eines faseroptischen Beschleunigungssensors 110, ausgebildet sein. Ferner kann ein Sensorkabel zum An- und Abstecken vom Feldverteiler zum Messgerät oder zur Auswerteeinheit 114 bereitgestellt sein. Gemäß manchen Ausführungsformen ist der Verteiler 501 am Blattschott oder in der Blattwurzel angeordnet.

Wie in Figur 4 dargestellt, kann ein Übertragungslichtleiter 503, beispielsweise eine weitere optische Faser, von dem Verteiler 501 zu der Auswerteeinheit 114 geführt sein. Zum Beispiel kann der Übertragungslichtleiter 503 entlang einer Feder oder einer Spirale oder durch eine Feder oder eine Spirale oder ein entsprechendes mechanisches Element geführt sein, so dass bei einer Rotation des Rotorblatts 100 um seine Blattachse 101, insbesondere beim Pitchen des Rotorblatts 100, der Übertragungslichtleiter 503 nicht beschädigt wird. Die mechanische Führung des Übertragungslichtleiters 503 entlang einer Spirale oder durch eine Spirale erlaubt somit eine Torsion des Übertragungslichtleiters 503.

Figur 4 zeigt einen faseroptischen Beschleunigungssensor 110 in jeweils einem der Rotorblätter 100. Darüber hinaus ist es möglich, eine Messung der Beschleunigung an mehreren Positionen entlang der Blattachse 101 eines Rotorblatts 100 an mehreren Positionen entlang der Blattachse 101 des Rotorblatts 100 vorzunehmen. Hierzu können mehrere faseroptische Beschleunigungssensoren 110 an der jeweiligen Position bereitgestellt sein. Ferner kann es zweckmäßig sein, faseroptische Beschleunigungssensoren 110 nahe der Rotorblattspitze einer Windkraftanlage, d.h. in radial weit außen liegenden Bereichen des Rotors 500 einzusetzen. Hierzu ist bei einer Nachrüstung eines faseroptischen Beschleunigungssensors 110 eine optische Faser 112 zur Blattspitze zu verlegen.

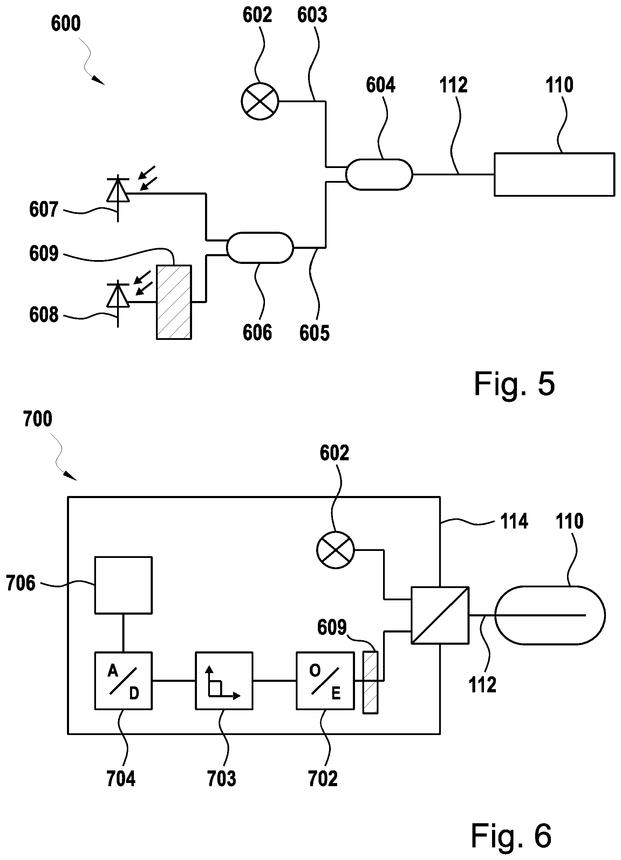

Figur 5 zeigt schematisch ein Messsystem 600 mit einem faseroptischen Beschleunigungssensor 110 nach hierin beschriebenen Ausführungsformen. Das Messsystem 600 umfasst einen oder mehrere faseroptische Beschleunigungssensoren 110. Das Messsystem 600 weist eine Quelle 602 für elektromagnetische Strahlung wie beispielsweise eine Primärlichtquelle auf. Die Quelle 602 dient zur Bereitstellung von optischer Strahlung, mit welcher mindestens ein faseroptischer Beschleunigungssensor 110 bestrahlt werden kann. Zu diesem Zweck ist eine optische Übertragungsfaser oder ein Lichtleiter 603 zwischen der Primärlichtquelle 602 und einem ersten Faserkoppler 604 bereitgestellt. Der Faserkoppler 604 koppelt das Primärlicht in die optische Faser 112 ein. Die Quelle 602 kann zum Beispiel eine Breitbandlichtquelle, einen Laser, eine LED (light emitting diode), eine SLD (Superlumineszenzdiode), eine ASE-Lichtquelle (Amplified Spontaneous Emission-Lichtquelle) oder ein SOA (Semiconductor Optical Amplifier) sein. Es können für hier beschriebene Ausführungsformen auch mehrere Quellen gleichen oder unterschiedlichen Typs verwendet werden.

Gemäß Ausführungsformen ist die optische Faser 112 des faseroptischen Beschleunigungssensors 110 an einen optischen Resonator 302 des faseroptischen Beschleunigungssensors 110 optisch angekoppelt, wobei der optischen Resonator 302 insbesondere die Faserendfläche 131 der optischen Faser 112, die Schwingungsmembran 103 und die zwischen der Faserendfläche 131 und einer reflektierenden Membranfläche ausgebildete Kavität 107 umfasst. Das von dem mindestens einen faseroptischen Beschleunigungssensor 110 zurückgeworfene Licht wird wiederum über den Faserkoppler 604 geleitet, welcher das Licht über eine weitere Übertragungsfaser 605 in einen Strahlteiler 606 leitet. Der Strahlteiler 606 teilt das zurückgeworfene Licht zur Detektion mittels eines ersten Detektors 607 und eines zweiten Detektors 608 auf. Hierbei wird das auf dem zweiten Detektor 608 detektierte Signal zunächst mit einer optischen Filtereinrichtung 609 gefiltert. Durch die Filtereinrichtung 609 können eine Position eines aus dem optischen Resonator 302 ausgegebenen Interferenzmaximums oder - minimums bzw. eine Wellenlängenänderung durch den optischen Resonator 302 und damit eine Beschleunigung detektiert werden.

Im Allgemeinen kann ein Messsystem, wie es untenstehend beispielsweise für Messsystem 700 in Figur 6 dargestellt ist, auch ohne den Strahlteiler 606 oder den Detektor 607 bereitgestellt sein. Der Detektor 607 ermöglicht jedoch eine Normierung des Messsignals des faseroptischen Beschleunigungssensors 110 in Bezug auf anderweitige Intensitätsfluktuationen, wie zum Beispiel Schwankungen der Intensität der Quelle 602, Schwankungen durch Reflexionen an Schnittstellen zwischen einzelnen Lichtleitern, Schwankungen durch Reflexionen an Schnittstellen zwischen der optischen Faser 112 und dem Faserkoppler 604 oder andere Intensitätsschwankungen. Diese Normierung verbessert die Messgenauigkeit und reduziert beim Betrieb des Messsystems eine Abhängigkeit von der Länge der zwischen der Auswerteeinheit 114 und dem faseroptischen Beschleunigungssensor 110 bereitgestellten optischen Faser 112.

Figur 6 zeigt eine Ausführungsform einer Auswerteeinheit 114, wobei ein Signal eines faseroptischen Beschleunigungssensors 110 über eine optische Faser 112 zur Auswerteeinheit 114 geführt wird. In Figur 6 ist weiterhin eine Lichtquelle 602 dargestellt, die optional in der Auswerteeinheit bereitgestellt sein kann. Die Lichtquelle 602 kann aber auch unabhängig oder außerhalb von der Auswerteeinheit 114 bereitgestellt sein. Das optische Signal des faseroptischen Beschleunigungssensors 110, insbesondere das optische Interferenzsignal, welches Interferenzmaxima und Interferenzminima aufweisen kann, wird mit einem Detektor, beispielsweise mit einem Wandler 702 in ein elektrisches Signal gewandelt. Die Auswerteeinheit 114 kann einen opto-elektrischen Wandler zum Wandeln des optischen Signals in ein elektrisches Signal umfassen. Zum Beispiel können eine Fotodiode, ein Photomultiplier (PM) oder ein anderer opto-elektronischer Detektor als Wandler verwendet werden. Das elektrische Signal kann mit einem analogen Anti-Aliasing-Filter 703 gefiltert werden. Im Anschluss an die analoge Filterung mit einem analogen Anti-Aliasing-Filter oder Tiefpassfilter 703 wird das Signal mittels eines Analog-Digital-Wandlers 704 digitalisiert. Figur 6 zeigt ferner eine digitale Auswerteeinheit 706, die zum Beispiel eine CPU, einen Speicher und andere Elemente zur digitalen Datenverarbeitung umfassen kann.

Die optische Filtereinrichtung 609 oder zusätzliche optische Filtereinrichtungen zur Filterung des Interferenzspektrums oder zur Detektion von Interferenzmaxima und Interferenzminima können einen optischen Filter umfassen, der gewählt ist aus der Gruppe, welche besteht aus einem oder mehreren Kantenfiltern, einem Dünnschichtfilter, einem Faser-Bragg-Gitter, einem Arrayed-Waveguide-Grating (AWG), einem Echelle-Gitter, einer Gitteranordnung, einem Prisma, und jedweder Kombination davon.

Gemäß einer Ausführungsform, die mit anderen hierin beschriebenen Ausführungsformen kombiniert werden kann, ist es mit der beschriebenen Auswerteeinheit 114 möglich, eine Wellenlängenverschiebung von bis zu 2 pm aufzulösen. Bezogen auf Interferenzminima bedeutet dies eine Änderung der Kavitätslänge 111 von 0,001 μm.

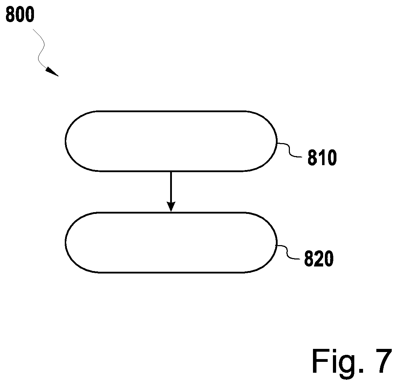

Gemäß Ausführungsformen wird ein Verfahren 800 zum Herstellen eines faseroptischen Beschleunigungssensors zum Bestimmen einer Beschleunigung entlang einer Achse angegeben, wie beispielsweise in Figur 7 schematisch dargestellt. Das Verfahren 800 umfasst bei Block 810 ein Bereitstellen eines transparenten Substrats. Beispielsweise kann das Substrat aus Glas bestehen, beispielsweise aus Quarzglas oder aus Borosilikatglas. Bei Block 820 erfolgt ein selektives Laserätzen einer Schwingungsmembran aus dem transparenten Substrat, wobei die Schwingungsmembran einen Membranrahmen, eine Auslenkmasse und Verbindungsbrücken umfasst, und wobei die Verbindungsbrücken den Membranrahmen und die Auslenkmasse an mindestens zwei voneinander verschiedenen, axialen Positionen verbinden. Die Schwingungsmembran kann gemäß hierin beschriebenen Ausführungsformen ausgebildet sein. Das selektive Laserätzen umfasst beispielsweise ein Einprägen einer Struktur der Schwingungsmembran in das Substrat. Das Einprägen umfasst beispielsweise ein Modifizieren, insbesondere ein chemisches Modifizieren durch Laserstrahlung, der Bereiche des Substrats, welche die Struktur der Schwingungsmembran umgeben. Das selektive Laserätzen kann weiterhin ein selektives Ätzen der durch die Laserstrahlung modifizierten Bereiche des Substrats umfassen. Insbesondere können die modifizierten Bereiche des Substrats unter Anwendung eines Ätzmittels auf das Substrat mit einer höheren Ätzrate geätzt werden. Durch das selektive Ätzen der modifizierten Bereiche kann die Schwingungsmembran aus dem Substrat geätzt werden.

Gemäß Ausführungsformen kann das Verfahren 800 weiterhin ein Anordnen der Schwingungsmembran relativ zu einer Faserendfläche einer optischen Faser umfassen. Insbesondere können der Membranrahmen der Schwingungsmembran und die optische Faser mit einem Sensorgehäuse verbunden werden. Insbesondere können die Schwingungsmembran und die optische Faser derart angeordnet werden, dass die Faserendfläche zumindest im Wesentlichen senkrecht zu der Achse ausgerichtet ist.

**Patentansprüche**

1. Faseroptischer Beschleunigungssensor (110) zum Bestimmen einer Beschleunigung entlang einer Achse, umfassend

   eine optische Faser (112) mit einer Faserendfläche (131); und
   eine Schwingungsmembran (103) mit einem Membranrahmen (121) und einer Auslenkmasse (123);
   wobei die Schwingungsmembran (103) eingerichtet ist, eine aus der Faserendfläche (131) tretende Primärstrahlung zumindest teilweise zu reflektieren;
   wobei die Schwingungsmembran (103) mit Verbindungsbrücken (125) ausgestattet ist; und
   wobei die Verbindungsbrücken (125) den Membranrahmen (121) und die Auslenkmasse (123) an mindestens zwei voneinander verschiedenen, axialen Positionen verbinden,
   **dadurch gekennzeichnet, dass**
   die Verbindungsbrücken : (125) zwischen dem Membranrahmen (121) und der Auslenkmasse (123) als Mäanderarme ausgeführt sind.

2. Faseroptischer Beschleunigungssensor nach Anspruch 1, wobei die Schwingungsmembran an den mindestens zwei axialen Positionen jeweils mindestens zwei, insbesondere mindestens drei, Verbindungsbrücken umfasst.

3. Faseroptischer Beschleunigungssensor nach einem der vorhergehenden Ansprüche, wobei die Verbindungsbrücken erste Verbindungsbrücken an einer ersten axialen Position der mindestens zwei axialen Positionen und zweite Verbindungsbrücken an einer zweiten axialen Position der mindestens zwei axialen Positionen umfassen; und wobei die ersten Verbindungsbrücken in Umfangsrichtung um die Achse versetzt zu den zweiten Verbindungsbrücken angeordnet sind.

4. Faseroptischer Beschleunigungssensor nach einem der vorhergehenden Ansprüche, wobei ein axialer Abstand zwischen den mindestens zwei axialen Positionen mindestens 0,1 mm, insbesondere mindestens 0,2 mm, und/oder maximal 5 mm, insbesondere maximal 3 mm, beträgt.

5. Faseroptischer Beschleunigungssensor nach einem der vorhergehenden Ansprüche, wobei die Schwingungsmembran eingerichtet ist für eine mechanische Auslenkung der Auslenkungsmasse von mindestens 0,25 nm/G, insbesondere von mindestens 0,5 nm/G, und/oder von maximal 40 nm/G, insbesondere von maximal 30 nm/G.

6. Faseroptischer Beschleunigungssensor nach einem der vorhergehenden Ansprüche, wobei die Schwingungsmembran einstückig hergestellt ist und/oder wobei die Schwingungsmembran aus Glas, insbesondere aus Quarzglas, hergestellt ist.

7. Faseroptischer Beschleunigungssensor nach einem der vorhergehenden Ansprüche, wobei die Schwingungsmembran durch selektives Laserätzen hergestellt ist.

8. Faseroptischer Beschleunigungssensor nach einem der vorhergehenden Ansprüche, wobei die Schwingungsmembran, insbesondere die Auslenkmasse, eine hochreflektierende Beschichtung aufweist.

9. Faseroptischer Beschleunigungssensor nach einem der vorhergehenden Ansprüche, umfassend eine zwischen der Faserendfläche und der Schwingungsmembran ausgebildete Kavität; wobei die Auslenkmasse eine der Kavität zugewandte, axiale Membranfläche umfasst; und wobei die Auslenkmasse hinter der axialen Membranfläche einen Störstellenbereich zur diffusen Zerstreuung von Licht umfasst.

10. Faseroptischer Beschleunigungssensor nach einem der vorhergehenden Ansprüche, wobei der faseroptische Beschleunigungssensor als ein Fabry-Perot-Interferometer eingerichtet ist; wobei die Faserendfläche der optischen Faser einen ersten Spiegel des Fabry-Perot-Interferometers bildet; und wobei die Schwingungsmembran einen zweiten Spiegel des Fabry-Perot-Interferometers bildet.

11. Faseroptisches Beschleunigungssensorsystem, mit mindestens zwei faseroptischen Beschleunigungssensoren nach einem der vorhergehenden Ansprüche, wobei das faseroptische Beschleunigungssensorsystem eingerichtet ist zum Bestimmen von Beschleunigungen entlang von mindestens zwei Achsen.

12. Windkraftanlage, mit mindestens einem faseroptischen Beschleunigungssensor nach einem der Ansprüche 1 bis 10 oder mindestens einem faseroptischen Beschleunigungssensorsystem nach Anspruch 11.

13. Windkraftanlage nach Anspruch 12, umfassend ein Rotorblatt; wobei der mindestens eine faseroptischen Beschleunigungssensor oder das mindestens eine faseroptische Beschleunigungssensorsystem in oder an dem Rotorblatt angeordnet ist.

14. Verfahren zum Herstellen eines faseroptischen Beschleunigungssensors zum Bestimmen einer Beschleunigung entlang einer Achse, insbesondere eines faseroptischen Beschleunigungssensors nach einem der Ansprüche 1 bis 10, umfassend

    - Bereitstellen eines transparenten Substrats; und
    - selektives Laserätzen einer Schwingungsmembran aus dem transparenten Substrat, wobei die Schwingungsmembran einen Membranrahmen und eine Auslenkmasse umfasst; wobei die Schwingungsmembran Verbindungsbrücken umfasst; und wobei die Verbindungsbrücken den Membranrahmen und die Auslenkmasse an mindestens zwei voneinander verschiedenen, axialen Positionen verbinden, **dadurch gekennzeichnet, dass** die Verbindungsbrücken zwischen dem Membranrahmen und der Auslenkmasse als Mäanderarme ausgeführt sind.

**Claims**

1. A fibre-optic accelerometer (110) for determining an acceleration along an axis, comprising

    an optical fibre (112) having a fibre end surface (131); and
    a vibrating membrane (103) having a membrane frame (121) and a deflection mass (123); wherein the vibrating membrane (103) is configured to reflect at least partially a primary radiation exiting from the fibre end surface (131); wherein the vibrating membrane (103) is equipped with connecting bridges (125); and wherein the connecting bridges (125) connect the membrane frame (121) and the deflection mass (123) at at least two axial positions different from one another, **characterised in that** the connecting bridges (125) between the membrane frame (121) and the deflection mass (123) are implemented as meandering arms.

2. The fibre-optic accelerometer according to claim 1, wherein the vibrating membrane comprises at least two, particularly at least three, connecting bridges at each of the at least two axial positions.

3. The fibre-optic accelerometer according to any one of the preceding claims, wherein the connecting bridges comprise first connecting bridges at a first axial position of the at least two axial positions, and second connecting bridges at a second axial position of the at least two axial positions; and wherein the first connecting bridges are circumferentially arranged offset to the second connecting bridges around the axis.

4. The fibre-optic accelerometer according to any one of the preceding claims, wherein an axial distance between the at least two axial positions is at least 0.1 mm, particularly at least 0.2 mm, and/or not more than 5 mm, particularly not more than 3 mm.

5. The fibre-optic accelerometer according to any one of the preceding claims, wherein the vibrating membrane is configured for a mechanical deflection of the deflection mass of at least 0.25 nm/G, particularly of at least 0.5 nm/G, and/or of not more than 40 nm/G, particularly of not more than 30 nm/G.

6. The fibre-optic accelerometer according to any one of the preceding claims, wherein the vibrating membrane is manufactured in one piece, and/or wherein the vibrating membrane is made of glass, particularly of quartz glass.

7. The fibre-optic accelerometer according to any one of the preceding claims, wherein the vibrating membrane is manufactured by selectively laser etching.

8. The fibre-optic accelerometer according to any one of the preceding claims, wherein the vibrating membrane, particularly the deflection mass, has a highly reflective coating.

9. The fibre-optic accelerometer according to any one of the preceding claims, comprising a cavity formed between the fibre end surface and the vibrating membrane; wherein the deflection mass comprises an axial membrane surface facing the cavity; and wherein the deflection mass behind the membrane surface comprises an impurity region for diffuse scattering light.

10. The fibre-optic accelerometer according to any one of the preceding claims, wherein the fibre-optic accelerometer is configured as a Fabry-Pérot interferometer; wherein the fibre end surface of the optical fibre forms a first mirror of the Fabry-Pérot interferometer; and wherein the vibrating membrane forms a second mirror of the Fabry-Pérot interferometer.

11. A fibre-optic accelerometer system comprising at least two fibre-optic accelerometers according to any one of the preceding claims, wherein the fibre-optic accelerometer system is configured to determine accelerations along at least two axes.

12. A wind turbine comprising at least one fibre-optic accelerometer according to any one of claims 1 to 10 or at least one fibre-optic accelerometer system according to claim 11.

13. The wind turbine according to claim 12, comprising a rotor blade; wherein the at least one fibre-optic accelerometer or the at least one fibre-optic accelerometer system is arranged within or on the rotor blade.

14. A method for manufacturing a fibre-optic accelerometer for determining an acceleration along an axis, particularly of a fibre-optic accelerometer according to any one of claims 1 to 10, comprising

- providing a transparent substrate; and
- selectively laser etching a vibrating membrane from the transparent substrate, wherein the vibrating membrane comprises a membrane frame and a deflection mass;
wherein the vibrating membrane comprises connecting bridges; and
wherein the connecting bridges connect the membrane frame and the deflection mass at at least two axial positions different from one another,
**characterised in that**
the connecting bridges between the membrane frame and the deflection mass are implemented as meandering arms.

## Revendications

1. Capteur d'accélération à fibre optique (110) pour déterminer une accélération le long d'un axe, comprenant

une fibre optique (112) avec une face d'extrémité de fibre (131) ; et
une membrane oscillante (103) avec un cadre de membrane (121) et une masse de déviation (123) ;
dans lequel la membrane oscillante (103) est configurée pour réfléchir au moins partiellement un rayonnement primaire émergeant de la face d'extrémité de la fibre (131) ;
dans lequel la membrane oscillante (103) est équipée de ponts de liaison (125) ;
et
dans lequel les ponts de liaison (125) relient le cadre de membrane (121) et la masse de déviation (123) à au moins deux positions axiales mutuellement différentes,
**caractérisé en ce que**
les ponts de liaison (125) entre le cadre de membrane (121) et la masse de déviation (123) sont conçus comme des bras méandres.

2. Capteur d'accélération à fibre optique selon la revendication 1, dans lequel la membrane oscillante comprend au moins deux, en particulier au moins trois, ponts de liaison à chacune des au moins deux positions axiales.

3. Capteur d'accélération à fibre optique selon l'une quelconque des revendications précédentes, dans lequel les ponts de liaison comprennent des premiers ponts de liaison à une première position axiale des au moins deux positions axiales et des seconds ponts de liaison à une seconde position axiale des au moins deux positions axiales ; et dans lequel les premiers ponts de liaison sont disposés de manière décalée par rapport aux seconds ponts de liaison dans la direction circonférentielle autour de l'axe.

4. Capteur d'accélération à fibre optique selon l'une quelconque des revendications précédentes, dans lequel une distance axiale entre les au moins deux positions axiales est d'au moins 0,1 mm, en particulier d'au moins 0,2 mm, et/ou d'un maximum de 5 mm, en particulier d'un maximum de 3 mm.

5. Capteur d'accélération à fibre optique selon l'une quelconque des revendications précédentes, dans lequel la membrane oscillante est configurée pour une déviation mécanique de la masse de déviation d'au moins 0,25 nm/G, en particulier d'au moins 0,5 nm/G, et/ou d'un maximum de 40 nm/G, en particulier d'un maximum de 30 nm/G.

6. Capteur d'accélération à fibre optique selon l'une quelconque des revendications précédentes, dans lequel la membrane oscillante est fabriquée d'une seule pièce et/ou dans lequel la membrane oscillante est en verre, en particulier en verre de quartz.

7. Capteur d'accélération à fibre optique selon l'une quelconque des revendications précédentes, dans lequel la membrane oscillante est fabriquée par gravure laser sélective.

8. Capteur d'accélération à fibre optique selon l'une quelconque des revendications précédentes, dans lequel la membrane oscillante, en particulier la masse de déviation, présente un revêtement hautement réfléchissant.

9. Capteur d'accélération à fibre optique selon l'une quelconque des revendications précédentes, comprenant une cavité formée entre la face d'extrémité de la fibre et la membrane oscillante ; dans lequel la masse de déviation comprend une surface de membrane axiale faisant face à la cavité ; et dans lequel la masse de déviation comprend une région d'impureté derrière la surface de membrane axiale pour diffuser la lumière de manière diffuse.

10. Capteur d'accélération à fibre optique selon l'une quelconque des revendications précédentes, dans lequel le capteur d'accélération à fibre optique est configuré comme un interféromètre de Fabry-Perot ; dans lequel la face d'extrémité de la fibre optique forme un premier miroir de l'interféromètre de Fabry-Perot ; et dans lequel la membrane oscillante forme un second miroir de l'interféromètre de Fabry-Perot.

11. Système de capteur d'accélération à fibre optique comprenant au moins deux capteurs d'accélération à fibre optique selon l'une quelconque des revendications précédentes, dans lequel le système de capteur d'accélération à fibre optique est configuré pour déterminer des accélérations le long d'au moins deux axes.

12. Éolienne comprenant au moins un capteur d'accélération à fibre optique selon l'une quelconque des revendications 1 à 10 ou au moins un système de capteur d'accélération à fibre optique selon la revendication 11.

13. Éolienne selon la revendication 12, comprenant une pale de rotor ; dans laquelle l'au moins un capteur d'accélération à fibre optique ou l'au moins un système de capteurs d'accélération à fibre optique sont disposés dans ou sur la pale de rotor.

14. Procédé de fabrication d'un capteur d'accélération à fibre optique pour déterminer une accélération le long d'un axe, en particulier un capteur d'accélération à fibre optique selon l'une quelconque des revendications 1 à 10, comprenant

- la fourniture d'un substrat transparent ; et
- la gravure sélective au laser d'une membrane oscillante à partir du substrat transparent, la membrane oscillante comprenant un cadre de membrane et une masse de déviation ;
dans lequel la membrane oscillante comprend des ponts de liaison ; et
dans lequel les ponts de liaison relient le cadre de membrane et la masse de déviation à au moins deux positions axiales mutuellement différentes,
**caractérisé en ce que**
les ponts de liaison entre le cadre de membrane et la masse de déviation sont conçus comme des bras méandres.

Fig. 1

Fig. 2

Fig. 3

Fig. 4

600

602    603

604    112    110

607

609

608

606    605

Fig. 5

700

602

114    110

706

609    112

A/D    704    703    702    O/E

704    703    702

Fig. 6

800

810

820

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3227552 B1
- DE 112005003758 B4
- US 2019360323 A1